# EUROPEAN PATENT APPLICATION

(11) **EP 4 528 992 A1**
(43) Date of publication of application: **26.03.2025**
(21) Application number: 23910073.8
(22) Date of filing: 11.12.2023
(51) Int. Cl.: H02K 1/32

(54) **ELECTRIC MOTOR COOLING SYSTEM, ELECTRIC MOTOR AND ROTOR THEREOF**

(30) Priority: 26.12.2022 CN 202211674685
(71) Applicant: XPT EDS (Hefei) Co., Ltd., Hefei City, Anhui 230601 (CN)
(72) Inventor: LI, Jiebao, Hefei, Anhui 230601 (CN); LI, Yuejiao, Hefei, Anhui 230601 (CN); WANG, Di, Hefei, Anhui 230601 (CN); XU, Shilong, Hefei, Anhui 230601 (CN); LI, Zhongliang, Hefei, Anhui 230601 (CN)
(74) Representative: Patentanwaltskanzlei Matschnig & Forsthuber OG
(86) International application number: PCT/CN2023/137896
(87) International publication number: WO 2024/140143

(57) **Abstract**

The disclosure relates to a rotor, the rotor including a rotating shaft, a rotor core, a first end cover and a second end cover. First communicating channels in the first end cover and second communicating channels in the second end cover communicate with two ends of the first liquid passages respectively, and a coolant flows into the first liquid passages of the rotor core and flows in two parts toward the first communicating channels and the second communicating channels. Since the third liquid passages and the second liquid passages are spaced from each other about an axis of a rotating shaft, the coolant can exert balance forces on the rotor core in opposite directions during flow, thus ensuring the dynamic balance of the rotor during rotation.

## Description

### TECHNICAL FIELD

The disclosure relates to the technical field of motors, and in particular to motor cooling system, a motor and a rotor thereof.

### BACKGROUND

As applications such as new energy vehicles have increasing requirements for power density and efficiency of a motor, a motor for driving a new energy vehicle is required to have a higher peak torque and motor efficiency with a smaller size. At present, motor cooling systems are mainly of types of liquid cooling and water cooling. Compared with a water cooling system, a liquid cooling can directly contact a winding of a motor and thus has a high thermal conductivity to improve the performance of the motor and is widely used in a motor system. When the motor is operating, the heating efficiency of a rotor directly affects the performance of the motor. A heat dissipation structure of a conventional rotor of a motor still has the problems of complex structure and poor heat dissipation effect.

### SUMMARY

In view of this, for the above-mentioned problems, it is necessary to provide a motor cooling system with a simpler structure and improved heat dissipation and cooling effect, a motor and a rotor thereof.

A rotor of a motor comprises a rotating shaft, a rotor core sleeved on the rotating shaft, a first end cover and a second end cover, where first liquid passages are formed in the rotor core close to the rotating shaft, and second liquid passages and third liquid passages that extend through the rotor core in an axial direction of the rotating shaft are further formed in the rotor core remote from the rotating shaft, the third liquid passages being spaced from the second liquid passages about an axis of the rotating shaft; and the first end cover and the second end cover each are sleeved on the rotating shaft and respectively connected to two ends of the rotor core, where first communicating channels and first drain holes are formed in the first end cover, and second communicating channels and second drain holes are formed in the second end cover, one ends of the first liquid passages communicating with one ends of the second liquid passages through the first communicating channels, the other ends of the second liquid passages communicating with the second drain holes, the other ends of the first liquid passages communicating with one ends of the third liquid passages through the second communicating channels, and the other ends of the third liquid passages communicating with the first drain holes.

In an embodiment, the second liquid passages and the third liquid passages are symmetrically arranged with respect to the axis of the rotating shaft.

In an embodiment, at least two second liquid passages are provided, all of the second liquid passages are spaced from each other about the axis of the rotating shaft, the number of the third liquid passages corresponds to the number of the second liquid passages, and a third liquid passage is arranged between every two adjacent second liquid passages; the number of the first communicating channels corresponds to the number of the second liquid passages, and each of the second liquid passages is correspondingly in communication with a first communicating channel; and the number of the second communicating channels corresponds to the number of the third liquid passages, and each of the third liquid passages is correspondingly in communication with a second communicating channel.

In an embodiment, all of the second liquid passages are evenly spaced apart from each other about the axis of the rotating shaft, and spacings between each of the third liquid passages and two second liquid passages adjacent the third liquid passage are the same.

In an embodiment, the number of the first drain holes corresponds to the number of the third liquid passages, each of the first drain holes is located between two adjacent first communicating channels, and the other end of each of the third liquid passages away from the second communicating channel is in communication with a first drain hole; and the number of the second drain holes corresponds to the number of the second liquid passages, each of the second drain holes is located between two adjacent second communicating channels, and the other end of each of the second liquid passages away from the first communicating channel is in communication with a second drain hole

In an embodiment, liquid passage grooves extending through the rotor core in the axial direction of the rotating shaft are formed in an inner wall of the rotor core facing the rotating shaft, and the first liquid passages are defined by the liquid passage grooves and an outer wall of the rotating shaft; an inlet passage is formed in the rotating shaft, and an outlet hole that is in communication with the inlet passage is provided in the outer wall of the rotating shaft; and the outlet hole is in communication with the first liquid passages.

In an embodiment, a spacing between the outlet hole and the first end cover is the same as a spacing between the outlet hole and the second end cover.

In an embodiment, at least two outlet holes are provided, all of the outlet holes are spaced from each other about the axis of the rotating shaft, and the number of the first liquid passages corresponds to the number of the outlet holes, and each of the outlet holes correspondingly communicates with a first liquid passage.

In an embodiment, the first communicating channel comprises a first transition slot section and a first arc-shaped slot section, where an arc of the first arc-shaped slot section is oriented in a direction of rotation of the rotor, the first transition slot section is in communication with the first arc-shaped slot section at one end and in communication with the first liquid passage at the other end, and the second liquid passage is interfaced with the first arc-shaped slot section at one end; and/or
the second communicating channel comprises a second transition slot section and a second arc-shaped slot section, wherein an arc of the second arc-shaped slot section is oriented in the direction of rotation of the rotor, the second transition slot section is in communication with the second arc-shaped slot section at one end and in communication with the first liquid passage at the other end, and the third liquid passage is interfaced with the second arc-shaped slot section at one end.

In an embodiment, each of the first transition slot sections is in communication with the first collecting groove at the other end; and each of the second transition slot sections is in communication with the second collecting groove at the other end.

In an embodiment, the second liquid passages are curvilinear passages; and/or the third liquid passages are curved passages.
a motor comprises a rotor as described above.

In the motor and its rotor described above, the coolant first flows into the first liquid passages of the rotor core close to the rotating shaft, since the first communicating channels in the first end cover and the second communicating channels in the second end cover communicate with two ends of the first liquid passages respectively, this causes the coolant in the first liquid passages to flow in two parts toward the first communicating channels and the second communicating channels respectively. The coolant flowing into the first communicating channels can further enter the second liquid passages and flow in the second liquid passages in the direction of the second end cover and is drained through the second drain holes; and The coolant flowing into the second communicating channels can enter the third liquid passages and flow in the third liquid passages in the direction of the first end cover and is drained through the first drain holes. Since the third liquid passages are spaced from the second liquid passages about the axis of the rotating shaft, the coolant in the second liquid passages flows in an opposite direction to the coolant in the third liquid passages, and the coolant in the first liquid passages also flows in two parts in opposite directions, the coolants can apply balance forces in opposite directions to the rotor core during the flow and the dynamic balance of the rotor is thus ensured during rotation.
a motor cooling system comprises a motor as described above and a transportation device for transporting a coolant to the first liquid passages.

An electric vehicle comprises a controller, a speed reducer, and a motor cooling system as described above, where the controller is connected to the motor to control the operations of the motor, and the speed reducer is connected to the rotating shaft of the rotor of the motor.

### BRIEF DESCRIPTION OF DRAWINGS

The drawings, which constitute a part of the disclosure, are intended to provide a further understanding of the disclosure, and the illustrative embodiments of the disclosure and the description thereof are intended to explain the disclosure and do not unduly limit the disclosure.

In order to more clearly illustrate the technical solutions in the embodiments of the disclosure, the drawings to be used in the description of the embodiments will be described briefly below. Obviously, the drawings in the following description are merely some embodiments of the disclosure. For those of ordinary skill in the art, other drawings can also be obtained according to these drawings without involving any inventive effort.

In addition, the drawings are not drawn to a scale of 1 : 1, and the relative dimensions of individual elements are drawn merely by way of example, and are not necessarily drawn to a true scale. In the figures:
FIG. 1 is a cross-sectional view of a rotor of a motor according to an embodiment;
FIG. 2 is a side view of a rotor core of FIG. 1;
FIG. 3 is a front view of a rotating shaft of FIG. 1;
FIG. 4 is a cross-sectional view of the rotating shaft shown in FIG. 3;
FIG. 5 is a side view of a first end cover of FIG. 1;
FIG. 6 is a side cross-sectional view of the first end cover of FIG. 5 according to an embodiment;
FIG. 7 is a side cross-sectional view of a second end cover of FIG. 1 according to an embodiment;
FIG. 8 is a side view of the rotor of the motor shown in FIG. 1;
FIG. 9 is a schematic view of a coolant flow of the rotor of the motor shown in FIG. 8 according to an embodiment;
FIG. 10 is a side view of the rotor of the motor shown in FIG. 1; and
FIG. 11 is a schematic diagram of a coolant flow of the rotor of the motor shown in FIG. 10 according to another embodiment.

### List of reference signs:

10. Rotor; 100. Rotating shaft; 110. Inlet passage; 120. Outlet hole; 200. Rotor core; 210. First liquid passage; 220. Second liquid passage; 230. Third liquid passage; 300. First end cover; 310. First communicating channel; 311. First transition slot section; 312. First arc-shaped slot section; 320. First drain hole; 321. First communicating hole; 322. First drain slot; 330. First through hole; 400. Second end cover; 410. Second drain hole; 411. Second communicating hole; 412. Second drain slot; 420. Second communicating channel; 421. Second transition slot section; 422. Second arc-shaped slot section; 430. Second through hole.

### DESCRIPTION OF EMBODIMENTS

In order to make the above objectives, features and advantages of the disclosure more clearly understood, the particular embodiments of the disclosure will be described in detail below with reference to the accompanying drawings. In the following description, many specific details are set forth in order to provide a thorough understanding of the disclosure. However, the disclosure can be implemented in numerous other ways that are different from those described herein, a person skilled in the art can make similar improvements without departing from the connotation of the disclosure, and therefore the disclosure is not limited to the particular embodiments disclosed below.

In an embodiment, a motor cooling system may be used in mechanical equipment for heat dissipation and cooling of a motor. For example, the mechanical equipment can be any mechanical device such as an electric vehicle, machining equipment and construction machinery.

In particular, heat generated by the motor can be carried away by providing a flow channel in the motor cooling system and causing a coolant as a heat exchange medium to flow in the flow channel, so as to achieve the heat dissipation and cooling of the motor. The coolant may be lubricating oil. Of course, the coolant can also be another cooling process medium with insulation properties, which is not limited here.

In an embodiment, the motor cooling system may further include a motor and a transportation device for transporting a coolant to the motor to facilitate cooling of the motor. The transportation device can be used to power the coolant to drive the coolant to flow and carry away the heat from the motor.

In an embodiment, the motor cooling system further includes a heat exchanger such that heat can be absorbed from a high temperature coolant by heat exchange of the heat exchanger to achieve heat exchange cooling of the coolant, allowing the coolant to be reused. That is, the heat exchanger can be used for heat exchange with the coolant carrying the heat from the motor to cool the motor, thus allowing the coolant to be reused.

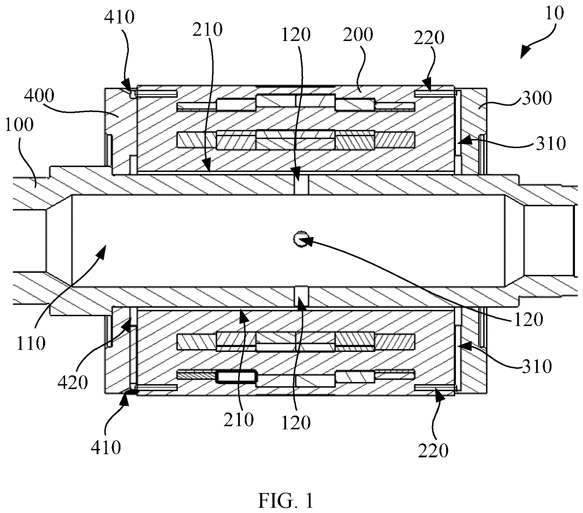

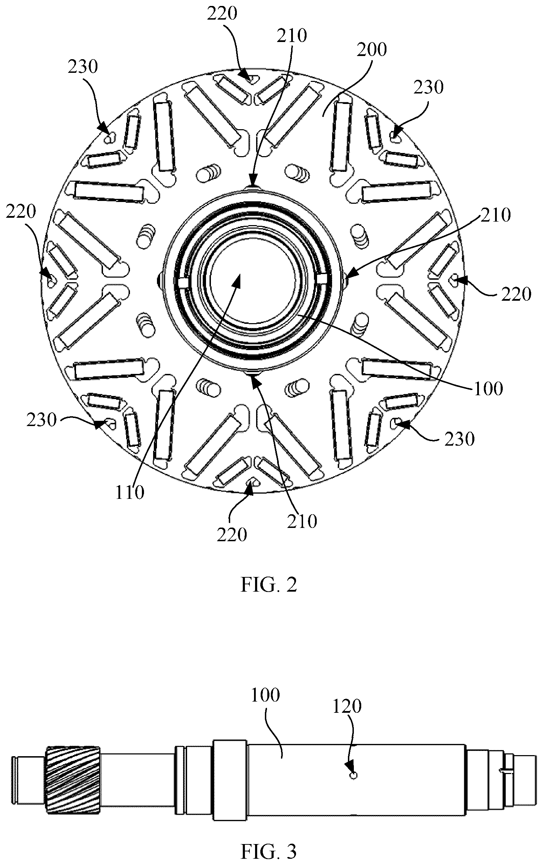

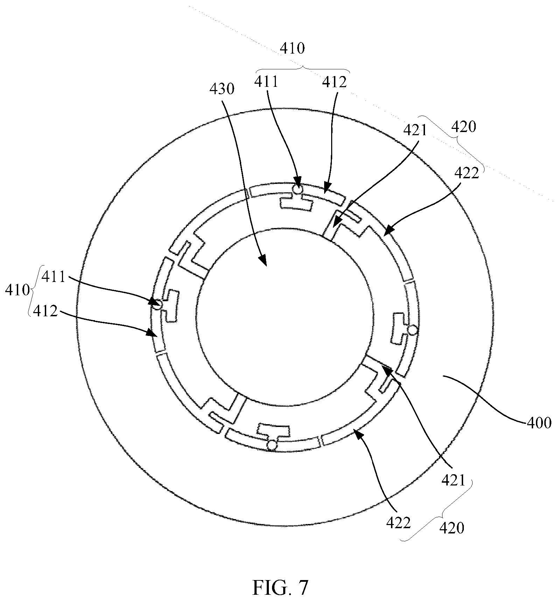

Referring to FIGS. 1 and 2, in an embodiment, the motor includes a rotor 10. The rotor 10 includes a rotating shaft 100, a rotor core 200, a first end cover 300, and the second end cover 400, where the rotor core 200 is sleeved on the rotating shaft 100, first liquid passages 210 are formed in the rotor core 200 close to the rotating shaft 100, and second liquid passages 220 and third liquid passages 230 that extend through the rotor core 200 in an axial direction of the rotating shaft 100 are further formed in the rotor core 200 remote from the rotating shaft 100, the third liquid passages 230 being spaced from the second liquid passages 220 about the axis of the rotating shaft 100; The first end cover 300 and the second end cover 400 are both sleeved on the rotating shaft 100 and are connected to two ends of the rotor core 200, respectively. First communicating channels 310 are formed in the first end cover 300. One ends of the first liquid passages 210 communicate with one ends of the second liquid passages 220 through the first communicating channels 310; Second communicating channels 420 are formed in the second end cover 400 (as shown in FIG. 7), and the other ends of the first liquid passages 210 communicate with one ends of the third liquid passages 230 through the second communicating channels 420.

If the rotor core 200 is considered to have two end faces spaced apart in the axial direction of the rotating shaft 100 (one of the end faces of the rotor core 200 of FIG. 1 schematically illustrated in a side view of the rotor core of FIG. 2), the second liquid passages 220 and the third liquid passages 230 extending through the rotor core 200 in the axial direction of the rotating shaft 100 means that the ends of each of the second liquid passages 220 and the ends of each of the third liquid passages 230 extend to the two end faces respectively.

The coolant first flows into the first liquid passages 210 of the rotor core 200 close to the rotating shaft 100. Since the first communicating channels 310 in the first end cover 300 and the second communicating channels 420 in the second end cover 400 communicate with two ends of the first liquid passages 210, respectively, this causes the coolant in the first liquid passages 210 to flow in two parts toward the first communicating channels 310 and the second communicating channels 420 respectively. The coolant flowing into the first communicating channels 310 can further enter the second liquid passages 220 and flow in the second liquid passages 220 in the direction of the second end cover 400. The coolant flowing into the second communicating channels 420 can further enter the third liquid passages 230 and flow in the third liquid passages 230 in the direction of the first end cover 300. Therefore, the coolant in the second liquid passages 220 flows in an opposite direction to the coolant in the third liquid passages 230, and the coolant in the first liquid passages 210 also flows in two parts in opposite directions, such that the coolants can apply balance forces in opposite directions to the rotor core 200 during the flow and it thus facilitates ensuring the dynamic balance of the rotor 10 during rotation.

Also, since the third liquid passages 230 and the second liquid passages 220 are spaced apart about the axis of the rotating shaft 100 and are located away from the rotating shaft 100, portions of the rotor core 200 away from the rotating shaft 100 are cooled. The first liquid passages 210 are located close to the rotating shaft 100 and thus cool portions of the rotor core 200 close to the rotating shaft 100, enhancing the cooling effect on the rotor core 200.

In this embodiment, the third liquid passages 230 are spaced from the second liquid passages 220 about the axis of the rotating shaft 100. It may also be understood that the third liquid passages 230 are spaced from the second liquid passages 220 in a circumferential direction of the rotating shaft 100.

Referring to FIG. 1, in an embodiment, the first end cover 300 is connected to one end of the rotor core 200, and the second end cover 400 is connected to the other end of the rotor core 200. Thus, the first end cover 300 and the second end cover 400 are provided, and the first end cover 300 and the second end cover 400 are connected to two ends of the rotor core 200 respectively, such that it is possible to firmly secure the rotor core 200 to the rotating shaft 100 to improve the strength and stability of the overall structure of the rotor 10. The rotor core 200, the first end cover 300 and the second end cover 400 are all sleeved on the rotating shaft 100, such that they can be driven to rotate together under the action of rotation of the rotating shaft 100.

Specifically, a first through hole 330 is provided in the first end cover 300, a second through hole 430 is provided in the second end cover 400, and two ends of the rotating shaft 100 pass through the first through hole 330 and the second through hole 430 respectively.

Referring to FIG. 1, in an embodiment, liquid passage grooves extending through the rotor core 200 in the axial direction of the rotating shaft 100 are formed in an inner wall of the rotor core 200 facing the rotating shaft 100, and the first liquid passages 210 are defined by the liquid passage grooves and an outer wall of the rotating shaft 100. If the rotor core 200 is considered to have two end faces spaced apart in the axial direction of the rotating shaft 100 (one of the end faces of the rotor core 200 of FIG. 1 schematically illustrated in the side view of the rotor core of FIG. 2), the liquid passage grooves extending through the rotor core 200 in the axial direction of the rotating shaft 100 means that the ends of each of the liquid passage grooves extend to the two end faces respectively. The first liquid passages 210 are defined by the inner wall of the rotor core 200 facing the rotating shaft 100 and the rotating shaft 100, such that the first liquid passages 210 are easily formed and the complexity of the formation of the first liquid passages 210 is reduced. The coolant can continue to flow in the second liquid passages 220 and the third liquid passages 230 after passing through the first liquid passages 210, such that the cooling effect on the rotor core 200 can be enhanced and an inner side and the portions of the rotor core 200 close to its outer side are cooled.

Referring to FIGS. 1, 3 and 4, in an embodiment, an inlet passage 110 is formed in the rotating shaft 100, and an outlet hole 120 that is in communication with the inlet passage 110 is provided in the outer wall of the rotating shaft 100. The outlet hole 120 is in communication with the first liquid passages 210. When it is desired to supply a coolant to the first liquid passages 210, the coolant can be transported through the inlet passages 110, and then, during the rotation of the rotor 10, the coolant is drained through the outlet hole 120 into the first liquid passages 210, improving the efficiency of coolant circulation.

Specifically, the inlet passage 110 extends through one end of the rotating shaft 100 to facilitate the transportation of the coolant into the inlet passage 110 through this end.

In an embodiment, the transportation device is used to transport the coolant to the first liquid passages 210. In this embodiment, the transportation device is used to transport the coolant to the inlet passage 110.

Referring to FIG. 1, in an embodiment, a spacing between the outlet hole 120 and the first end cover 300 is the same as a spacing between the outlet hole 120 and the second end cover 400. The coolant drained through the outlet hole 120 can flow equally to the first end cover 300 and the second end cover 400, further ensuring the dynamic balance of the rotor 10 during rotation.

In an embodiment, at least two outlet holes 120 are provided, all of the outlet holes 120 are spaced from each other about the axis of the rotating shaft 100, and the number of the first liquid passages 210 corresponds to the number of the outlet holes 120. Each of the outlet holes 120 correspondingly communicates with one first liquid passage 210. Specifically, all of the outlet holes 120 are evenly spaced from each other about the axis of the rotating shaft 100, and the first liquid passages 210 are uniformly spaced from each other about the axis of the rotating shaft 100. The at least two outlet holes 120 and the at least two first liquid passages 210 are provided such that the cooling effect on the rotor core 200 can be improved, and all of the outlet holes 120 and the first liquid passages 210 are evenly arranged such that an equal flow of the coolant can be further ensured and the dynamic balance of the rotor 10 during rotation is ensured. In another embodiment, the individual outlet holes 120 may be unevenly arranged about the axis of the rotating shaft 100, as long as the discharge of the coolant into the first liquid passages 210 through the individual outlet holes 120 can be ensured.

In this embodiment, four outlet holes 120 are provided, four first liquid passages 210 are provided correspondingly, and each of the outlet holes 120 is in communication with one first liquid passage 210.

In an embodiment, the second liquid passages 220 and the third liquid passages 230 each are located away from the rotating shaft 100 with respect to the first liquid passages 210. That is, the second liquid passages 220 and the third liquid passages 230 each are located outside the first liquid passages 210. It may be understood that the second liquid passages 220 and the third liquid passages 230 each are arranged close to the outer wall of the rotor core 200 with respect to the first liquid passages 210, such that the second liquid passages 220 and the third liquid passages 230 can be effectively used to cool the portions of the rotor core 200 close to its outer side. Specifically, the second liquid passages 220 and the third liquid passages 230 each are arranged close to the outer wall of the rotor core 200.

In an embodiment, the length direction of each of the first liquid passages 210 coincides with the axial direction of the rotating shaft 100, i.e., the coolant in the first liquid passages 210 can circulate in the axial direction of the rotating shaft 100. Specifically, the liquid passage grooves are strip-shaped grooves along the axial direction of the rotating shaft 100, and can further reduce the difficulty in machining the first liquid passages 210 and further reduce the complexity of the structure.

In an embodiment, that second liquid passages 220 may be lightening holes, magnetic steel holes, or any other process holes. For example, when the second liquid passages 220 are magnetic steel holes, corresponding magnetic steel can be fixed by means of an expansion coating or a magnetic steel adhesive, avoiding the use of injection molding which causes the holes to be blocked.

In an embodiment, the second liquid passages 220 are curved passages. The second liquid passages 220 are curved with respect to the axis of the rotating shaft 100, and can thus effectively increase the length of each of the second liquid passages 220 and extend a circulation path for the coolant in the second liquid passage 220 to improve the cooling and heat dissipation effects on the rotor core 200. Since the second liquid passages 220 are curved passages, in the rotor 10 shown in FIG. 2, only some of the second liquid passages 220 can be shown in the axial direction of the rotating shaft 100. For example, the rotor core 200 is laminated after punching from core sheets, all the holes in the sheets are in the same position. When a motor is designed with rotor skew poles, the second liquid passages 220 may be exactly in the form of a curve.

In another embodiment, the second liquid passages 220 may also be rectilinear passages, the length direction of the second liquid passage 220 is in the axial direction of the rotating shaft 100.

In an embodiment, the third liquid passages 230 may be lightening holes, magnetic steel holes, or any other process holes. For example, when the third liquid passages 230 are magnetic steel holes, corresponding magnetic steel can be fixed by means of an expansion coating or a magnetic steel adhesive, avoiding the use of injection molding which causes the holes to be blocked.

In an embodiment, the third liquid passages 230 are curved passages. The third liquid passages 230 are curved with respect to the axis of the rotating shaft 100, and can thus effectively increase the length of each of the third liquid passages 230 and extend a circulation path for the coolant in the third liquid passage 230 to improve the cooling and heat dissipation effects on the rotor core 200. Since the third liquid passages 230 are curved passages, in the rotor 10 shown in FIG. 2, only some of the third liquid passages 230 can be shown in the axial direction of the rotating shaft 100. For example, the rotor core 200 is laminated after punching from core sheets, all the holes in the sheets are in the same position. When a motor is designed with rotor skew poles, the third liquid passages 230 may be exactly in the form of a curve.

In another embodiment, the third liquid passages 230 may also be rectilinear passages, the length direction of the third liquid passage 230 is in the axial direction of the rotating shaft 100.

Referring to FIGS. 1 and 2, in an embodiment, the third liquid passages 230 and second liquid passages 220 are symmetrically arranged about the axis of the rotating shaft 100. By means of the symmetrical arrangement of the second liquid passages 220 and the third liquid passages 230, the forces exerted by the coolant on the rotating shaft 100 are symmetrical and opposite, thus further ensuring the dynamic balance of the rotor 10 during rotation. In another embodiment, the second liquid passages 220 and the third liquid passages 230 may also be asymmetrically arranged with respect to the axis of the rotating shaft 100, so long as it is ensured that the coolant in the third liquid passages 230 and the second liquid passages 220 flows in opposite directions.

Referring to FIGS. 1 and 2, in an embodiment, at least two second liquid passages 220 are provided, and all of the second liquid passages 220 are spaced from each other about the axis of the rotating shaft 100. The number of third liquid passages 230 corresponds to the number of second liquid passages 220, and a third liquid passage 230 is arranged between every two adjacent second liquid passages 220. Specifically, all of the second liquid passages 220 are equidistantly spaced from each other about the axis of the rotating shaft 100. A third liquid passage 230 is arranged between every adjacent two second liquid passages 220 such that the number of the second liquid passages 220 corresponds to the number of the third liquid passages 230, the amount of the coolant flowing toward the first end cover 300 thus corresponds to the amount of the coolant flowing toward the second end cover 400, and the coolant flowing in different directions thus applies uniform forces to the rotor core 200 in different directions, ensuring the dynamic balance of the rotor core 200 during rotation.

In other embodiments, a spacing between the second liquid passages 220 around the axis of the rotating shaft 100 may also vary.

Specifically, spacings between each third liquid passage 230 and two second liquid passages 220 adjacent thereto are the same. The same spacings between each third liquid passage 230 and two second liquid passages 220 adjacent thereto makes it possible to ensure that the different directions of forces generated by the coolant are evenly distributed around the axis of the rotating shaft 100, thus further ensuring the dynamic balance of the rotor core 200 during rotation.

In this embodiment, as shown in FIG. 2, four second liquid passages 220 are provided, and four third liquid passages 230 are also provided, and the second liquid passages 220 and the third liquid passages 230 are evenly arranged about the axis of the rotating shaft 100. In other embodiments, the number of the second liquid passages 220 corresponds to the number of the third liquid passages 230, both of which may be 2, 3, 5, or another number.

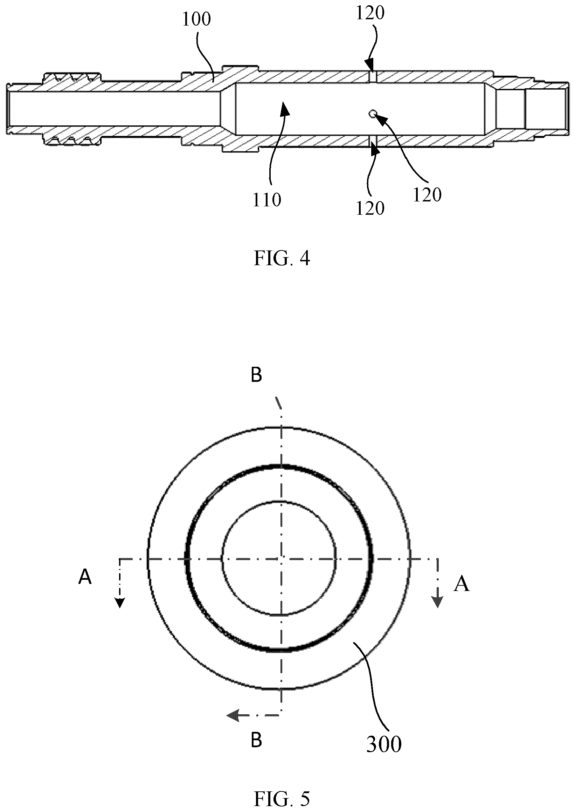

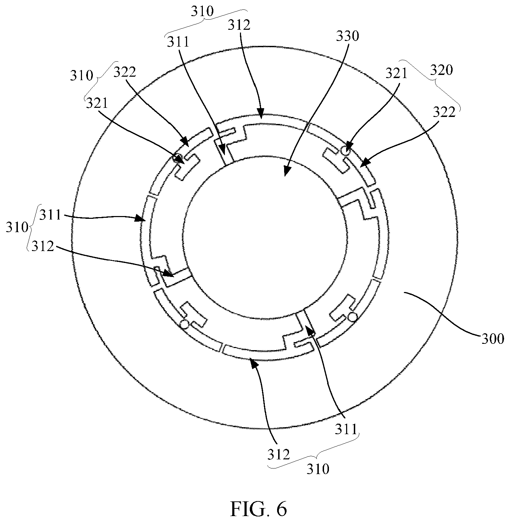

Referring to FIGS. 5 and 6 together, in an embodiment, the number of the first communicating channels 310 corresponds to the number of the second liquid passages 220, and each of the second liquid passages 220 is correspondingly in communication with a first communicating channel 310. The number of the second communicating channels 420 corresponds to the number of the third liquid passages 230, and each of the third liquid passage 230 is correspondingly in communication with a second communicating channel 420. By setting the number of the first communicating channels 310 and the number of the second communicating channels 420 to correspond to the number of the second liquid passages 220 and the number of the third liquid passages 230, respectively, it is ensured that the coolant can enter the second liquid passages 220 and the third liquid passages 230 respectively through the first communicating channels 310 and the second communicating channels 420.

In an embodiment, a first collecting groove is further provided on the first end cover 300, each of the first liquid passages 210 is in communication with the first collecting groove at one end, and each of the first communicating channels 310 is in communication with the first collecting groove. Specifically, the first through hole 330 is provided in a bottom wall of the first collecting groove. The first collecting groove is provided such that it is possible to facilitate that the coolant exiting the first liquid passages 210 enters the first collecting groove and then enters the respective first communicating channels 310 via the first collecting groove. Therefore, the number of the first liquid passages 210 is not constrained by the first communicating channels 310, and the arrangement of the first liquid passages 210 may also not be constrained by the arrangement of the first communicating channels 310.

Specifically, the first collecting groove is an annular groove around the first through hole 330, the first liquid passages 210 communicate with an inner-ring side of the first collecting groove at one end, and the first communicating channels 310 communicate with the first collecting groove via an outer-ring side of the first collecting groove.

In another embodiment, the first collecting groove may also be omitted, the number of the first liquid passages 210 corresponds to the number of the first communicating channels 310, and each of the first communicating channels 310 is in communication with an end of a first liquid passage 210.

In an embodiment, the first communicating channel 310 includes a first transition slot section 311 and a first arc-shaped slot section 312, where the first transition slot section 311 is in communication with the first arc-shaped slot section 312 at one end and in communication with the first liquid passage 210 at the other end, and the second liquid passage 220 is interfaced with the first arc-shaped slot section 312 at one end. Specifically, each of the first transition slot sections 311 is in communication with the first collecting groove at the other end. The provision of the first arc-shaped slot section 312 allows to increase the length of the first communicating channel 310, facilitating the communication between the first liquid passage 210 and the second liquid passage 220. Since the length of the first communicating channel 310 is increased, the capacity of the first communicating channel 310 to store the coolant can be increased, thus enhancing the cooling effect achieved by the first communicating channel 310.

In this embodiment, an arc of the first arc-shaped slot section 312 is oriented in a direction of rotation of the rotor 10. By orienting the arc of the first arc-shaped slot section 312 in the direction of rotation of the rotor 10, the first arc-shaped slot section 312 can be effectively filled full with the coolant during the rotation of the rotor core 200, ensuring the cooling effect.

Referring to FIGS. 2 and 7, in an embodiment, a second collecting groove is further provided on the second end cover 400, each of the first liquid passages 210 is in communication with the second collecting groove at the other end, and each of the second communicating channels 420 is in communication with the second collecting groove. Specifically, the second through hole 430 is provided in a bottom wall of the second collecting groove. The second collecting groove is provided such that it is possible to facilitate that the coolant exiting the first liquid passages 210 enters the second collecting groove and then enters the respective second communicating channels 420 via the second collecting groove. Therefore, the number of the first liquid passages 210 is not constrained by the second communicating channels 420, and the arrangement of the first liquid passages 210 may also not be constrained by the arrangement of the second communicating channels 420.

Specifically, the second collecting groove is an annular groove around the second through hole 430, the first liquid passages 210 communicate with an inner-ring side of the second collecting groove at the other end, and the second communicating channels 420 communicate with the second collecting groove via an outer-ring side of the second collecting groove.

In another embodiment, the second collecting groove may also be omitted, the number of the first liquid passages 210 corresponds to the number of the second communicating channels 420, and each of the second communicating channels 420 is in communication with an end of a second liquid passage 220.

In an embodiment, the second communicating channel 420 includes a second transition slot section 421 and a second arc-shaped slot section 422, where the second transition slot section 421 is in communication with the second arc-shaped slot section 422 at one end and in communication with the first liquid passage 210 at the other end, and the third liquid passage 230 is interfaced with the second arc-shaped slot section 422 at one end. Specifically, each of the second transition slot sections 421 is in communication with the second collecting groove at the other end. The provision of the second arc-shaped slot section 422 allows to increase the length of the second communicating channel 420, which, on the one hand, facilitates the communication between the second liquid passage 220 and the second liquid passage 220, and on the other hand, can increase the capacity of the second communicating channel 420 to store the coolant, thus enhancing the cooling effect achieved by the second communicating channel 420.

In this embodiment, an arc of the second arc-shaped slot section 422 is oriented in the direction of rotation of the rotor 10. By orienting the arc of the second arc-shaped slot section 422 in the direction of rotation of the rotor 10, the second arc-shaped slot section 422 can be effectively filled full with the coolant during the rotation of the rotor core 200, ensuring the cooling effect.

Referring to FIGS. 1, 6 and 7, in an embodiment, the first communicating channels 310 are formed in a surface of the first end cover 300 facing the rotor core 200. The second communicating channels 420 are formed in a surface of the second end cover 400 facing the rotor core 200.

Referring to FIG. 1, in an embodiment, an end of the second liquid passage 220 away from the first communicating channel 310 is in communication with a space outside the rotor core 200. An end of the third liquid passage 230 away from the second communicating channel 420 is in communication with the space outside the rotor core 200. The coolant in the second liquid passage 220 can flow from the first end cover 300 in the direction of the second end cover 400 and is drained from one side of the second end cover 400. The coolant in the third liquid passage 230 can flow from the second end cover 400 in the direction of the first end cover 300 and is drained from one side of the first end cover 300 to enable the flow of the coolant.

Referring to FIGS. 1, 6, and 7, in an embodiment, first drain holes 320 are formed in the first end cover 300, where the other ends of the third liquid passages 230 are in communication with the first drain holes 320. The coolant in the third liquid passages 230 can be drained through the first drain holes 320. Specifically, the number of the first drain holes 320 corresponds to the number of the third liquid passages 230, each of the first drain holes 320 is located between two adjacent first communicating channels 310, and the other end of each of the third liquid passages 230 away from the second communicating channel 420 is in communication with a first drain hole 320. The provision of the first drain holes 320 can facilitate the drainage of the coolant in the third liquid passages 230 from one side of the first end cover 300.

In this embodiment, each of the first drain holes 320 includes a first communicating hole 321 and a first drain slot 322, where the first drain slot 322 is provided in the first end cover 300, and the first communicating hole 321 is in communication with the first drain slot 322 and extends through the first end cover 300. The first drain slot 322 is provided to facilitate interfacing with the third liquid passage 230 for drainage of the coolant through the first communicating hole 321.

Specifically, the first drain slot 322 is an arc-shaped slot, and the arc of the first drain slot 322 is oriented in the direction of rotation of the rotating shaft 100, and the coolant is thus drained from the first communicating hole 321.

In an embodiment, second drain holes 410 are formed in the second end cover 400, and the other ends of the second liquid passages 220 away from the first communicating channels 310 are in communication with the second drain holes 410. The coolant in the second liquid passages 220 can be drained through the second drain holes 410 to the space outside the rotor core 200.

Specifically, the number of the second drain holes 410 corresponds to the number of the second liquid passages 220, each of the second drain holes 410 is located between two adjacent second communicating channels 420, and the other end of each of the second liquid passages 220 away from the first communicating channel 310 is in communication with a second drain hole 410. The provision of the second drain holes 410 can facilitate the drainage of the coolant in the second liquid passages 220 from one side of the second end cover 400.

In this embodiment, each of the second drain holes 410 includes a second communicating hole 411 and a second drain slot 412, where the second drain slot 412 is provided in the second end cover 400, and the second communicating hole 411 is in communication with the second drain slot 412 and extends through the second end cover 400. The second drain slot 412 is provided to facilitate interfacing with the second liquid passage 220 for drainage of the coolant through the second communicating hole 411.

Specifically, the second drain slot 412 is an arc-shaped slot, and an arc of the second drain slot 412 is oriented in the direction of rotation of the rotating shaft 100, and the coolant is thus drained from the second communicating hole 411.

Referring to FIGS. 1, 6 and 7, in an embodiment, the first end cover 300 and the second end cover 400 are of a symmetrical structure. The first communicating channels 310 correspond to the second drain holes 410 in terms of position in the axial direction, and the second communicating channels 420 correspond to the first drain holes 320 in terms of position in the axial direction. Specifically, the first end cover 300 has the same structure as the second end cover 400 in order to that the first communicating channels 310 correspond to the second drain holes 410 in terms of position in the axial direction and the second communicating channels 420 correspond to the first drain holes 320 in terms of position in the axial direction during mounting. The first end cover 300 and second end cover 400 are designed identically such that the dynamic balance of both ends of the rotor 10 can be further ensured and the dynamic balance of the rotor 10 during rotation can be further ensured.

In other embodiments, that first end cover 300 and second end cover 400 may also be configured differently depending on the requirements for communication and drainage.

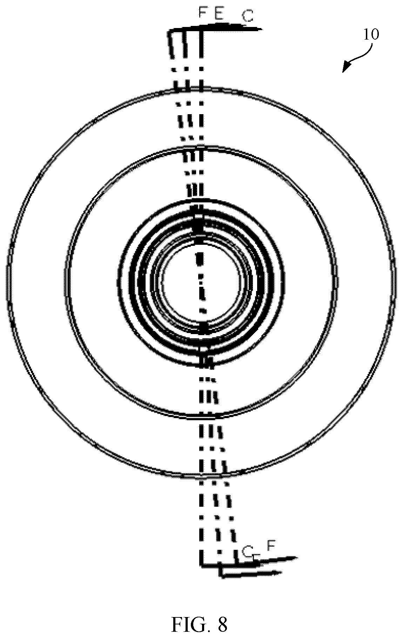

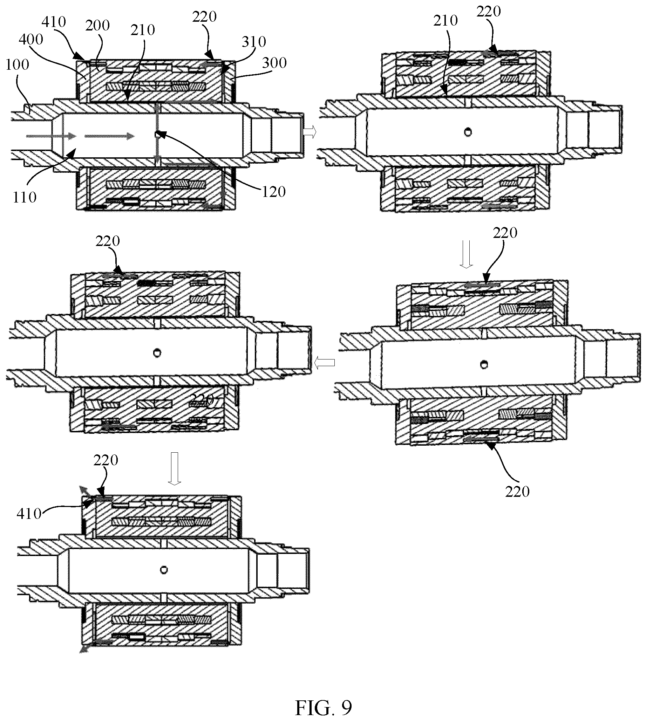

Referring to FIGS. 1, 8 and 9, in the order indicated by the hollow arrows, the five drawings of FIG. 9 are respectively a cross-sectional view of the rotor 10 shown in FIG. 8 along line C-C, a cross-sectional view of the rotor 10 shown in FIG. 8 along line E-E, a cross-sectional view of the rotor 10 shown in FIG. 8 along line F-F, a cross-sectional view of the rotor 10 shown in FIG. 8 along line E-E and a cross-sectional view of the rotor 10 shown in FIG. 8 along line C-C. Thus, as indicated by the arrows in each of the drawings of FIG. 9, the coolant enters the inlet passages 110 of the rotating shaft 100 and is then drained through the outlet hole 120 into the first liquid passages 210 formed between the rotor core 200 and the rotating shaft 100. Some of the coolant in the first liquid passages 210 circulates in the direction of the first end cover 300 and into the first communicating channels 310 of the first end cover 300, and then flows from the first communicating channels 310 into the second liquid passages 220. The coolant in the second liquid passages 220 then circulates from the first end cover 300 in the direction of the second end cover 400 until it flows into the second drain holes 410 in the second end cover 400 and is drained through the second drain holes 410.

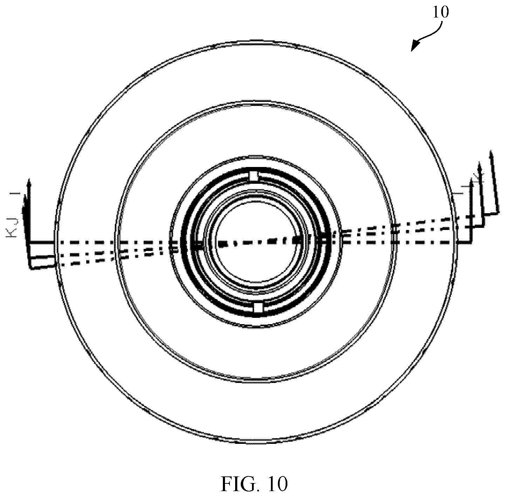

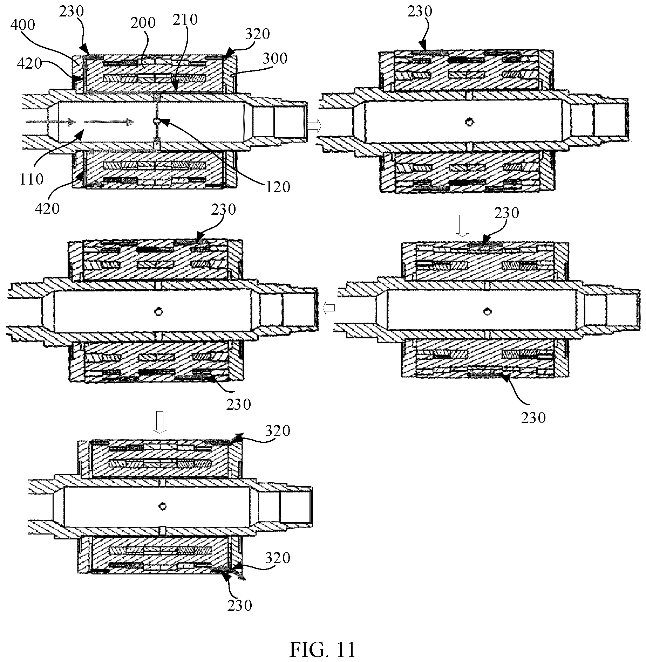

Referring to FIGS. 1, 10 and 11, in the order indicated by the hollow arrows, the five drawings of FIG. 11 are respectively a cross-sectional view of the rotor 10 shown in FIG. 10 along line I-I, a cross-sectional view of the rotor 10 shown in FIG. 10 along line J-J, a cross-sectional view of the rotor 10 shown in FIG. 10 along line K-K, a cross-sectional view of the rotor 10 shown in FIG. 10 along line J-J and a cross-sectional view of the rotor 10 shown in FIG. 10 along line I-I. The coolant enters the inlet passages 110 of the rotating shaft 100 and is then drained through the outlet hole 120 into the first liquid passages 210 formed between the rotor core 200 and the rotating shaft 100. The other part of the coolant in the first liquid passages 210 circulates in the direction of the second end cover 400, and flows into the second communicating channels 420 of the second end cover 400, and then circulates from the second communicating channels 420 to the third liquid passages 230. The coolant in the third liquid passages 230 then circulates from the second end cover 400 in the direction of the first end cover 300 until it flows into the first drain holes 320 in the first end cover 300 and is drained through the first drain holes 320.

As can be seen with respective to FIGS. 9 and 11, the coolant entering the first liquid passages 210 circulates in both directions of the first end cover 300 and the second end cover 400, and the first communicating channels 310 and the second communicating channels 420 are in communication with the second liquid passages 220 and the third liquid passages 230 respectively, so as to circulate the coolant in second liquid passages 220 and the third liquid passages 230 in a different directions, such that the cooling and heat dissipation effects are enhanced and the coolant in the second liquid passages 220 and the third liquid passages 230 exerts forces on the rotor core 200 in different directions during circulation to further ensure the dynamic balance of the rotor 10 during rotation.

In at least some embodiments, the rotor 10 of the motor has at least one of the following advantages:
first, the first liquid passages 210, second liquid passages 220, third liquid passages 230 that are evenly arranged and the outlet holes 120, and the first end cover 300 and a second end cover 400 that are symmetrically arranged can effectively ensure the dynamic balance of the rotor 10 during cooling and heat dissipation and improve the stability of the rotor 10 during operating;
second, the first liquid passages 210 are provided to allow the portion of the rotor core 200 close to the inner side of the rotating shaft 100 to be cooled, the second liquid passages 220 and the third liquid passages 230 are provided to allow the portion of the rotor core 200 close to the outside to be cooled, such that the rotor core 200 can be sufficiently cooled and the risk of demagnetization temperature rise of the rotor core 200 is reduced, so as to ensure the magnetic stability and high reliability of the rotor core 200, improve the continuous performance of a motor, which is favorable to the high-speed development trend of motors; and
third, the configuration of the structure of the above rotor 10 is simpler, which can effectively reduce the cost while the cooling and heat dissipation are ensured.

An electric vehicle in an embodiment includes a controller, a speed reducer, and a motor cooling system in any of the above embodiments, where the controller is connected to the motor to control the operations of the motor, and the speed reducer is connected to the rotating shaft 100 of the rotor 10 of the motor. In the electric vehicle of the embodiment of the disclosure, the rotor core 200 of motor can achieve effective and continuous heat dissipation and has a high operational reliability, therefore, the performance of the vehicle is guaranteed.

In an embodiment, the electric vehicle may be, but is not limited to, an electric car, an electric bus, a motorcycle, etc.

Any combination of the technical features of the above embodiments may be possible, and in order to simplify the descriptions, not all possible combinations of the technical features of the above embodiments are described. However, as long as there is no conflict between the combinations of these technical features, they should be considered to be within the scope of the description.

The above embodiments merely represent several implementations of the disclosure, giving specifics and details thereof, but should not be understood as limiting the scope of patentability of the disclosure. It should be noted that several variations and improvements may also be made by those of ordinary skill in the art without departing from the concept of the disclosure, and should fall within the scope of protection of the disclosure. Therefore, the scope of protection of the disclosure shall be defined by the appended claims.

In the description of the disclosure, it should be understood that orientation or position relationships indicated by the terms such as "center", "longitudinal", "transverse", "length", "width", "thickness", "up", "down", "front", "rear", "left", "right", "vertical", "horizontal", "top", "bottom", "inner", "outer", "clockwise", "counterclockwise", "axial", "radial", and "circumferential" are based on the orientation or position relationships shown in the accompanying drawings and are merely for ease of description of the disclosure and simplification of the description, rather than indicating or implying that the devices or elements referred to must have a specific orientation or be constructed and operated in a specific orientation, and thus cannot be construed as limiting the disclosure.

In addition, the terms "first" and "second" are used for descriptive purposes only, and cannot be construed as indicating or implying relative importance or implicitly indicating the number of technical features indicated. Therefore, the features defined with "first" and "second" may explicitly or implicitly include at least one of the features. In the description of the disclosure, the phrase "a plurality of" means at least two, such as two, three, etc., unless otherwise specifically defined.

In the disclosure, unless explicitly specified or defined otherwise, the terms such as "mounting", "connection", "connected" and "fixing" should be interpreted in a broad sense, for example, may be a fixed connection, a detachable connection, or integration; or may be a mechanical connection or an electrical connection; may be a direct connection or an indirect connection via an intermediate medium, or may be communication between interiors of two elements or interaction between the two elements, unless otherwise specifically defined. For those of ordinary skill in the art, the specific meaning of the terms mentioned above in the disclosure should be construed according to specific circumstances.

In the disclosure, unless otherwise explicitly specified and defined, the expression of a first feature being "on" or "under" a second feature may be the case that the first feature is in direct contact with the second feature, or the first feature is in indirect contact with the second feature via an intermediate medium. Moreover, the expression the first feature being "over", "above" and "on top of" the second feature may be the case that the first feature is directly above or obliquely above the second feature, or only means that the level of the first feature is higher than the second feature. The expression of the first feature being "underneath", "below" and "beneath" the second feature may be the case that the first feature is directly below or obliquely below the second feature, or only means that the level of the first feature is lower than the second feature.

It should be noted that when an element is referred to as being "fixed to" or "arranged on" a further element, it may be directly on the further element, or there may be an intermediate element. When an element is referred to as being "connected" to a further element, it may be directly connected to the further element, or there may be an intermediate element. The terms "vertical", "horizontal", "upper", "lower", "left", "right", or the like used herein are for illustrative purposes only and do not represent any unique implementation.

## Claims

1. A rotor (10) of a motor, **characterized in that** the rotor (10) comprises:
a rotating shaft (100);
a rotor core (200) sleeved on rotating shaft (100), wherein first liquid passages (210) are formed in the rotor core (200) close to the rotating shaft (100), and second liquid passages (220) and third liquid passages (230) that extend through the rotor core (200) in an axial direction of the rotating shaft (100) are further formed in the rotor core (200) remote from the rotating shaft (100), the third liquid passages (230) being spaced from the second liquid passages (220) about an axis of the rotating shaft (100); and
a first end cover (300) and a second end cover (400) each sleeved on the rotating shaft (100) and respectively connected to two ends of the rotor core (200), wherein first communicating channels (310) and first drain holes (320) are formed in the first end cover (300), and second communicating channels (420) and second drain holes (410) are formed in the second end cover (400), one ends of the first liquid passages (210) communicating with one ends of the second liquid passages (220) through the first communicating channels (310), the other ends of the second liquid passages (220) communicating with the second drain holes (410), the other ends of the first liquid passages (210) communicating with one ends of the third liquid passages (230) through the second communicating channels (420), and the other ends of the third liquid passages (230) communicating with the first drain holes (320).

2. The rotor (10) of a motor according to claim 1, **characterized in that** the second liquid passages (220) and the third liquid passages (230) are symmetrically arranged with respect to the axis of the rotating shaft (100).

3. The rotor (10) of a motor according to claim 1, **characterized in that** at least two second liquid passages (220) are provided, all of the second liquid passages (220) are spaced from each other about the axis of the rotating shaft (100), the number of the third liquid passages (230) corresponds to the number of the second liquid passages (220), and a third liquid passage (230) is arranged between every two adjacent second liquid passages (220);
the number of the first communicating channels (310) corresponds to the number of the second liquid passages (220), and each of the second liquid passages (220) is correspondingly in communication with a first communicating channel (310); and the number of the second communicating channels (420) corresponds to the number of the third liquid passages (230), and each of the third liquid passages (230) is correspondingly in communication with a second communicating channel (420).

4. The rotor (10) of a motor according to claim 3, **characterized in that** all of the second liquid passages (220) are evenly spaced apart from each other about the axis of the rotating shaft (100), and spacings between each of the third liquid passages (230) and two second liquid passages (220) adjacent the third liquid passage (230) are the same.

5. The rotor (10) of a motor according to claim 3, **characterized in that** the number of the first drain holes (320) corresponds to the number of the third liquid passages (230), each of the first drain holes (320) is located between two adjacent first communicating channels (310), and the other end of each of the third liquid passages (230) away from the second communicating channel (420) is in communication with a first drain hole (320); and the number of the second drain holes (410) corresponds to the number of the second liquid passages (220), each of the second drain holes (410) is located between two adjacent second communicating channels (420), and the other end of each of the second liquid passages (220) away from the first communicating channel (310) is in communication with a second drain hole (410).

6. The rotor (10) of a motor according to any one of claims 3-5, **characterized in that** liquid passage grooves extending through the rotor core (200) in the axial direction of the rotating shaft (100) are formed in an inner wall of the rotor core (200) facing the rotating shaft (100), and the first liquid passages (210) are defined by the liquid passage grooves and an outer wall of the rotating shaft (100); aninlet passage (110) is formed in the rotating shaft (100), and an outlet hole (120) that is in communication with theinlet passage (110) is provided in the outer wall of the rotating shaft (100); and the outlet hole (120) is in communication with the first liquid passages (210).

7. The rotor (10) of a motor according to claim 6, **characterized in that** a spacing between the outlet hole (120) and the first end cover (300) is the same as a spacing between the outlet hole (120) and the second end cover (400); and/or
at least two outlet holes (120) are provided, all of the outlet holes (120) are spaced from each other about the axis of the rotating shaft (100), the number of the first liquid passages (210) corresponds to the number of the outlet holes (120), and each of the outlet holes (120) correspondingly communicates with a first liquid passage (210).

8. The rotor (10) of a motor according to any one of claims 1-5, **characterized in that** the first communicating channel (310) comprises a first transition slot section (311) and a first arc-shaped slot section (312), wherein an arc of the first arc-shaped slot section (312) is oriented in a direction of rotation of the rotor, the first transition slot section (311) is in communication with the first arc-shaped slot section (312) at one end and in communication with the first liquid passage (210) at the other end, and the second liquid passage (220) is interfaced with the first arc-shaped slot section (312) at one end; and/or
the second communicating channel (420) comprises a second transition slot section and a second arc-shaped slot section, wherein an arc of the second arc-shaped slot section is oriented in the direction of rotation of the rotor, the second transition slot section is in communication with the second arc-shaped slot section at one end and in communication with the first liquid passage (210) at the other end, and the third liquid passage (230) is interfaced with the second arc-shaped slot section at one end; and/or
the second liquid passages (220) are curved passages; and/or the third liquid passages (230) are curved passages.

9. a motor, **characterized by** comprising a rotor (10) of any one of claims 1-8.

10. a motor cooling system, **characterized by** comprising: a motor of claim 9, and a transportation device for transporting a coolant to the first liquid passages (210).
